(19) Europäisches Patentamt / European Patent Office / Office européen des brevets

(11) **EP 3 188 126 A1**

(12) **EUROPEAN PATENT APPLICATION**

(43) Date of publication:
**05.07.2017 Bulletin 2017/27**

(51) Int Cl.:
***G06T 7/00*** (2017.01)

(21) Application number: **15003699.4**

(22) Date of filing: **31.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Pierzchala, Przemyslaw 44-100 Gliwice (PL)**

(72) Inventor: **Pierzchala, Przemyslaw 44-100 Gliwice (PL)**

(54) **METHOD OF ROTATIONAL CALIBRATION OF VIDEO CAMERAS INTENDED FOR VAST SPACE SURVELLIANCE**

(57) The patent application describes the method of rotational calibration of video cameras intended for the surveillance of open space, especially the fire protection surveillance of forest areas, based on a number of measurements of the vector of divergences between the calculated position of the reference object in the image and the measured position; whereby the measured position results from the movement of the camera and imaging errors. As the movement of the camera between the two points of measurements is known, it is possible to calculate the imaging error for each position of the reference object in the image. The reference object is an object that emits a strong beam of light - e.g. a car headlamp placed in a fixed structure or a lift truck platform, located at the height similar to the height of installation of the calibrated camera, in the distance comparable with the radius of the area surveilled by the calibrated camera. The image of such a shining object can be easily recognized by systems of automatic analysis of the video image applied in the process.

EP 3 188 126 A1

## Description

The subject matter of the application is the method of rotational calibration of video cameras PTZ (PAN TILT ZOOM), intended for the surveillance of vast open space, especially the fire protection surveillance of forest areas.

Camera calibration is necessary in the video analysis process for the purposes of identifying the position of a supervised object in the three-dimensional space, which in turn is indispensable in the process of verification of supervised objects - determining whether the object in the position A (x, y) is the same object which after moving the camera in the horizontal plane, in the vertical plane, and after changing the close-up is visible in the point B (x1, y1).

In case of vast space surveillance cameras (surveillance radius 5-20 km from the camera) for the sake of simplification examination of the identity of objects in the two-dimensional plane of the image x-y is assumed. Due to optical errors of cameras, the movement of cameras along the horizontal and vertical axis, as well as the change of the close-up, as well as well-known phenomena connected with planar transformations, divergences occur between the observed position of the object in the plane of the screen x-y and the expected location, resulting from the angle of rotation in the horizontal and vertical axis. Finding these divergences and taking them into account in the object verification process is of key importance for the correct verification of the surveilled objects.

The currently known calibration methods require calibration in the laboratory environment with the application of test cards, or calibration in the space where for the purposes of calibration there are objects available, particularly the ones which have edges that intersect at the right angle (e.g. buildings, structures) or objects whose movement is measured by means of other sensors.

The patent description US2015346471 refers to a method that makes use of the image from many cameras, which is, nevertheless, useless in relation to the vast space surveillance system where one camera is used.

The method described in the patent US9201424 (B1), on the other hand, during the calibration process is based on the measurement of movement of the calibration object by means of other sensors; it is also applied only at the calibration of cameras operating in small distances - in this case cameras on an autonomous vehicle. For this reason this method is useless for the calibration of cameras used for vast space surveillance.

The method described in CN103258327 refers to cameras with 2 degrees of freedom and it does not take into account the close-up variability of the camera, as well.

It is impossible to adopt the existing calibration methods in-cameras intended for the open (non-urbanized) space surveillance, especially of vast forest areas.

The goal of this invention is to create the method of calibration of rotating cameras which could be adopted in a vast open space, particularly in fire protection surveillance cameras in forest areas.

METHOD DESCRIPTION

The foundation of the method is the performance of automatic measurements of the divergence vector between the calculated position of a reference object in the image and the read position (by the automatic analysis system); whereby the read position result from the movement of the camera and the imaging errors. As the movement of the camera between two measurement points is known, it is possible to calculate the imaging error for each position of the reference object in the image.

The reference object is a point object which emits a strong beam of light-e.g. a car headlamp or any other contrasting point object attached to a fixed structure, e.g. a lift truck platform located at the height similar to the height of the installation of the calibrated camera, in the distance comparable with the radius of the area surveilled by the calibrated camera.

The initial measurement point is a setting where the image of the reference object is located in the geometrical centre of the field of view of the camera (FOV), whereby the angular dimensions of FOV in the horizontal plane (Horizontal FOV-HFOV) and in the vertical plane (Vertical FOV-VFOV) depend on the given close-up degree of the ZOOM (z).

Next the camera performs multiple rotational and inclination movements, each time registering the parameters of the movement in the horizontal and vertical plane determined by the angles a and ß (PAN and TILT).

The series of movements are repeated for different close-up degrees of the ZOOM, whereas each time the initial point of the measurement is a setting where the image of the reference object is located in the geometrical centre of the FOV of the camera.

If the location of the image of the reference object on the plane of the image read by the analysis system is determined by Cartesian coordinates A(x,y), and the expected (computable) location of the image of the reference object is determined by the coordinates A'(x',y')
then the divergence of the position x, y for the given close-up z is determined with the vector AA'(x,y,z).

Whereby the location of the calculated position A'(x'y') will be determined by the formula:

$$x' = \frac{2\alpha}{Hfov(z)} \times \frac{1}{2} Hres$$

$$y' = \frac{2\beta}{Vfov(z)} \times \frac{1}{2}Vres$$

Where,

α - rotation angle of the camera from its initial position

z - close-up degree of the ZOOM

Hfov(z) - viewing angle of the camera in the horizontal plane in degrees as a function of z

Vfov(z) - as above, but in the vertical plane

Hres-horizontal definition of the image from the camera in pixels

Vres - as above, but vertical definition

Whereby the angles of the rotational movement of the camera counterclockwise are marked with a minus sign.

By performing multiple measurements, a table of divergence vectors for different positions x,y at a given close-up degree z is built.

AA'(x1,y2); BB'(x2,y2); CC'(x3,y3); DD'(x4,y4) etc.

The movement of the camera in the calibration process should be designed so as the image of the reference object could be read in the grid of horizontal and vertical positions with high density, whereby the more measurements are performed, the more precise the calibration process will be.

PRACTICAL APPLICATION

The application of this method in the surveillance process consists in reading the coordinates of the examined object from the screen and finding in the table corresponding to the current close-up degree of the ZOOM the divergence vector that is the closest to these coordinates. The actual position of the examined object will be determined by adding the selected divergence vector to the read position.

**Claims**

1. Method of rotational calibration of video cameras intended for the surveillance of open space, particularly the fire protection surveillance of forest areas, **characterized in** than the surveillance camera is embedded in a structure that overlooks the surface of the area and moves cyclically in the horizontal and vertical plane, performing rotational and inclination movements, as well as changing the focus of the lens (performing close-ups and long shots).

2. The method according to the claim 1, **characterized in that** in order to calibrate the camera it is necessary to measure - in the conditions of actual operation - the imaging errors resulting from the known properties of rotating cameras and optical lenses.

3. The method according to the claim 1 and 2, **characterized in that** in order to measure imaging errors a series of measurements of the location in the plane of the image of the reference object is performed automatically- by means of computer image analysis systems-each time at a different angle of rotation, inclination, repeating the series of measurements for different close-up degrees of the ZOOM of the camera. Let the location of the reference object on the plane of the image read by the analysis system be determined by means of Cartesian coordinates A(x, y), whereby the origin of the coordinate system will be located in the geometrical centre of the plane of the image.

4. The method according to the claim 1 and 3, **characterized in that** a reference object is an object that emits a strong beam of light - e.g. car headlamp, or any other contrasting object installed on a fixed structure or a lift truck platform, located at the height similar to the height of the installation of the calibrated camera, in the distance comparable with the radius of the area surveilled by the calibrated camera.

5. The method according to the claim 1 and 4, **characterized in** than the results of these measurements of the location on the plane of the reference object are compared with the expected locations of the image of this object calculated on the basis of the performed rotation and inclination movement of the camera at a given close-up degree of the ZOOM. Let the calculated location of the reference object on the plane of the image be determined by means of Cartesian coordinates A'(x,y).

6. The method according to the claim 1 and 5, **characterized in that** during the analysis of the video image the actual location of the surveilled object is calculated with the application of the table of AA' vectors, for a specific close-up degree of the ZOOM of the camera and a specific location of the surveilled object on the plane of the image.

7. The method according to the claims 1 and 6, **characterized in that** in order to obtain a correct location. of the object it is not necessary to perform time-consuming calculations for the entire area of the image, but only a simple calculation of the correction of the location of the point by the vector.

8. The method according to the claims 1 and 6, **characterized in that** for this method it is not necessary

**EP 3 188 126 A1**

to read the length of the focus of the camera lens in mm, and the method applies only the degree of the close-up of the ZOOM, which can be easily read in the driver of the camera.

Europäisches
Patentamt

European
Patent Office

Office européen
des brevets

# EUROPEAN SEARCH REPORT

Application Number

EP 15 00 3699

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 959 692 A1 (AXIS AB [SE]) 20 August 2008 (2008-08-20) * abstract * * paragraph [0063] * * paragraph [0065] - paragraph [0067] * * paragraph [0072] - paragraph [0079] * * figures 8,11a,11b * | 1-8 | INV. G06T7/00 |
| X | US 2010/013917 A1 (HANNA KEITH [US] ET AL) 21 January 2010 (2010-01-21) * abstract * * paragraph [0030] * * paragraph [0032] * * paragraph [0063] * * figures 1,4,8 * | 1-8 | |
| X | JULIE BADRI ET AL: "Camera-to-Camera Mapping for Hybrid Pan-Tilt-Zoom Sensors Calibration", 10 June 2007 (2007-06-10), IMAGE ANALYSIS : 15TH SCANDINAVIAN CONFERENCE, SCIA 2007, AALBORG, DENMARK, JUNE 10 - 14, 2007 ; PROCEEDINGS; [LECTURE NOTES IN COMPUTER SCIENCE;;LNCS], SPRINGER BERLIN HEIDELBERG, BERLIN, HEIDELBERG, PAGE(S) 132 - 141, XP019080661, ISBN: 978-3-540-73039-2 * abstract * * page 135 - page 136 * * page 137 - page 138 * | 1-8 | TECHNICAL FIELDS SEARCHED (IPC) G06T |

-/--

The present search report has been drawn up for all claims

| Place of search | Date of completion of the search | Examiner |
|---|---|---|
| Munich | 5 October 2016 | Luca, Mihai Bogdan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 00 3699

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | COLLINS R T ET AL: "Calibration of an outdoor active camera system", PROCEEDINGS OF THE 1999 IEEE COMPUTER SOCIETY CONFERENCE ON COMPUTER VISION AND PATTERN RECOGNITION, JUNE 23-25, 1999; FORT COLLINS, COLORADO, IEEE, THE INSTITUTE OF ELECTRICAL AND ELECTRONICS ENGINEERS, INC, US, vol. 1, 23 June 1999 (1999-06-23), pages 528-534, XP010347712, ISBN: 978-0-7695-0149-9 * abstract * * page 528 * * page 531 - page 533 * ----- | 1-8 | |

| TECHNICAL FIELDS SEARCHED (IPC) |
|---|
| |

The present search report has been drawn up for all claims

| Place of search | Date of completion of the search | Examiner |
|---|---|---|
| Munich | 5 October 2016 | Luca, Mihai Bogdan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 188 126 A1**

## ANNEX TO THE EUROPEAN SEARCH REPORT
## ON EUROPEAN PATENT APPLICATION NO.

EP 15 00 3699

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2016

| Patent document cited in search report | | Publication date | Patent family member(s) | | Publication date |
|---|---|---|---|---|---|
| EP 1959692 | A1 | 20-08-2008 | AT | 497679 T | 15-02-2011 |
| | | | CN | 101251704 A | 27-08-2008 |
| | | | EP | 1959692 A1 | 20-08-2008 |
| | | | ES | 2359349 T3 | 20-05-2011 |
| | | | JP | 5179895 B2 | 10-04-2013 |
| | | | JP | 2008245260 A | 09-10-2008 |
| | | | KR | 20080077331 A | 22-08-2008 |
| | | | TW | 200844636 A | 16-11-2008 |
| | | | US | 2008204560 A1 | 28-08-2008 |
| US 2010013917 | A1 | 21-01-2010 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015346471 A
- US 9201424 B
- CN 103258327